# EUROPÄISCHE PATENTSCHRIFT

(11) **EP 0 706 753 B1**
(45) Veröffentlichungstag und Bekanntmachung des Hinweises auf die Patenterteilung: **20.10.1999**
(21) Anmeldenummer: 95114433.6
(22) Anmeldetag: 14.09.1995
(51) Int. Cl.: A01G 1/00, E04D 11/00

(54) **Hygroskopische Steinwollmatte**
Hygroscopic rock wool mat
Tapis de laine de roche hygroscopique

(30) Priorität: 13.10.1994 DE 4436443
(43) Veröffentlichungstag der Anmeldung: 17.04.1996
(73) Patentinhaber: Behrens, Wolfgang, D-27243 Gross Ippener (DE)
(72) Erfinder: Behrens, Wolfgang, D-27243 Gross Ippener (DE)
(74) Vertreter: Patentanwälte Thömen & Körner

(56) Entgegenhaltungen:
- EP-A- 0 677 242
- DE-A- 3 200 869
- DE-A- 3 805 069
- DE-C- 4 219 275
- DE-U- 9 314 533
- US-A- 5 301 466

## Beschreibung

Die Erfindung betrifft eine hygroskopische Steinwollmatte zur Verwendung bei einem Vegetationselement für die Begrünung von Dächern oder dergleichen.

Schon seit längerer Zeit werden Vegetationselemente verwendet, um flache oder auch geneigte Dächer oder andere Flächen zu begrünen, um einen Ausgleich dafür zu schaffen, daß die natürliche Vegetation durch die zunehmend dichter werdende Besiedlung zerstört wird.

Neben der vorteilhaften Auswirkung der Vegetationselemente auf die Umgebung, wie die Reduzierung des Kohlendioxidgehalts der Luft und die Sauerstoffproduktion sowie die Schaffung eines ausgeglichenen Klimas wird im Sommer auch eine zu starke Aufheizung der Gebäude und im Winter eine übermäßige Abkühlung verhindert. Dadurch wird das Raumklima in Gebäuden mit begrünten Dächern verbessert.

Die Vegetationselemente umfassen eine mit einem Nährmedium versehene Kulturschicht, um das Wachsen von niederen und/oder höheren Pflanzen zu ermöglichen. Für diese Kulturschicht kommt normalerweise Substrat in Betracht, und durch die deutsche Patentschrift DE 42 19 275 C2, sowie durch die DE 93 14 533 U1 ist es auch schon bekannt, anstelle des Substrats hygroskopische Steinwollmatten zu verwenden. Dabei dient der obere Teil der Steinwollmatte als Kulturschicht und dieser obere Teil nimmt im wesentlichen die Wurzeln der Pflanzen auf, während der untere Teil in vorteilhafter Weise die Funktion einer Isolierung im Brandfalle übernimmt, d.h. die Steinwollmatte wirkt als Brandschutz.

Die bisher für Vegetationselemente verwendeten Steinwollmatten sind sehr dick, beispielsweise 5 cm, und besitzen ein großes Volumengewicht in einer Größenordnung von 120 - 140 kg/m³. Obwohl sich mit solchen dicken Platten aus Steinwolle der vorteilhafte Brandschutz bei Vegetationselementen erzielen läßt, ist die Verwendung dieser Steinwollmatten mit großem Raumgewicht als nachteilig anzusehen. Als zu kaufendes Produkt liegen diese bekannten Steinwollmatten nämlich nur in Form von Platten vor, deren Transport zum gewünschten Einsatzort, etwa auf einem zu begrünenden Dach, wegen des großen Gewichts nicht nur teuer, sondern auch umständlich ist. Die Handhabung solcher schweren und dicken Platten aus Steinwolle und ihre Verlegung auf einem Dach sind außerdem sehr kostenintensiv.

In der Praxis müssen die schweren Steinwollplatten zunächst auf dem gewünschten Dach verlegt werden, und anschließend werden Nährstoffe in die Steinwolle angebracht. Schließlich werden Samen oder Pflanzenteile hinzugefügt, um die erwünschte Begrünung zu erzielen. In dieser Kultivierungsphase können noch gärtnerische Arbeiten anfallen, die dann auf dem Dach vorgenommen werden müssen, was ebenfalls als nachteilig anzusehen ist und Kosten verursacht.

Der Erfindung liegt die Aufgabe zugrunde, eine verbesserte Steinwollmatte zu schaffen, welche unter Beibehaltung des Vorteils des Brandschutzes eine kostengünstigere Begrünung von Dächern oder dergleichen ermöglicht und welche die Herstellung einer solchen Dachbegrünung wesentlich vereinfacht.

Dieses Ziel erreicht die Erfindung bei der im Oberbegriff des Patentanspruchs 1 erwähnten hygroskopischen Steinwollmatte durch die Merkmale des kennzeichnenden Teils des Patentanspruchs 1.

Durch die Erfindung wird in neuartiger Weise eine Steinwollmatte geschaffen, die sich durch zwei wesentliche Punkte auszeichnet. Die Steinwollmatte ist in Abweichung der bisherigen Matten so dünn und besitzt ein vergleichsweise niedriges Volumengewicht, daß sie leicht handhabbar ist und zu einer Rolle aufgerollt werden kann. Ein weiteres wichtiges Merkmal besteht darin, daß diese aufrollbare Steinwollmatte bereits mit Pflanzen vorkultiviert und somit begrünt ist, so daß sie als ein Fertigprodukt zur Verfügung steht. Da die begrünte Steinwollmatte aufrollbar ist und relativ leicht ist, läßt sie sich einfach zum gewünschten Einsatzort auf einem Dach transportieren.

Es sind zwar bereits, beispielsweise aus der US 5 301 466, aufrollbare Vegetationselemente bekannt, diese lassen sich aber nicht oder nur ungenügend zur Begrünung von Dächern verwenden, da sie das für das Wachstum der Pflanzen nötige Wasser nicht oder nur ungenügend speichern können und ferner zu Brandschutzzwecken ungeeignet sind.

Der erfindungsgemäße Schritt, die Steinwollmatte rollbar auszubilden, ist als eine überraschende Maßnahme anzusehen. Man hat bisher nämlich beim Stand der Technik davon abgesehen, dünne Steinwollmatten mit geringem Volumengewicht zu verwenden und aufzurollen, weil die Gefahr besteht, daß die hygroskopische Steinwolle Feuchtigkeit aufsaugt bzw. aufnimmt, wodurch ihre Stabilität verlorengeht. Eine feucht gewordene dünne Steinwollmatte reißt nämlich sehr leicht ein, wenn man sie anfaßt und aufrollen will. In Versuchen mit feuchten und nassen Steinwollmatten mit geringer Dicke hat sich dieser Umstand immer wieder bestätigt.

Bei der Erfindung besteht jedoch nicht mehr die Gefahr, daß die feuchte und nasse Steinwollmatte bei ihrer mechanischen Handhabung reißt. Dies ist darauf zurückzuführen, daß die dünne Steinwollmatte mit dem vergleichsweise geringen Volumengewicht mit Pflanzen begrünt wird. Es wurde überraschend gefunden, daß durch die Wurzeln der Pflanzen eine mechanische Verfestigung der Steinwollmatte im Sinne einer Armierung erfolgt, die man als biologische Armierung bezeichnen kann. Die erfindungsgemäßen Steinwollmatten sind deshalb auch dann noch mechanisch handhabbar und zu einer Rolle aufrollbar, wenn sie feucht und naß sind.

Die Vorkultivierung der neuen Steinwollmatten ermöglicht es in vorteilhafter Weise, die Begrünung schon vorher vorzunehmen, bevor die Steinwollmatten auf einem Dach zum Einsatz zur Bildung eines Vegetationselements angebracht werden. Man kann daher begrünte Steinwollmatten auf Vorrat herstellen und lagern. Wenn dann der Bedarf besteht, ein Dach zu begrünen, ist eine sofortige Lieferung möglich. Die fertig begrünten Steinwollmatten werden aufgerollt und lassen sich problemlos zum gewünschten Einsatzort transportieren und auf dem Dach ausrollen und auslegen. Dabei sind die Anlieferung und auch die Verlegung wegen der einfachen Handhabung sehr preisgünstig.

Ein weiterer Vorteil der Erfindung besteht darin, daß die bereits kultivierten und begrünten Steinwollmatten auch selbst und allein bereits als fertiges Vegetationselement dienen und auf einem Dach verlegt werden können. Die erfindungsgemäße Steinwollmatte erfüllt nämlich bereits alle minimalen Anforderungen eines Vegetationselementes für die Begrünung von Dächern oder dergleichen. Nach dem Verlegen auf einem Dach sind wesentliche gärtnerische Arbeiten nicht mehr erforderlich.

Gemäß der Erfindung besitzt die Steinwollmatte eine Dicke von 2,0 - 3,5 cm und das Volumengewicht liegt zwischen 30 kg/m³ und 80 kg/m³ vorzugsweise zwischen 30 kg/m³ und 50 kg/m³. Besonders zweckmäßig ist eine Dicke von circa 3,0 cm und ein Volumengewicht von etwa 40 kg/m³. Eine solche Steinwollmatte ist vergleichsweise leicht und dünn und läßt sich im begrünten Zustand ohne weiteres zu einer Rolle aufrollen.

In vorteilhafter Weise besitzt die Steinwollmatte eine untere wasserdurchlässige Trägerschicht, die zweckmäßiger Weise aus einem Vlies besteht und mit der Steinwollmatte verklebt oder auf andere Art mechanisch an der Steinwollmatte befestigt ist.

Durch diese wasserdurchlässige Trägerschicht, die auch durch ein grobmaschiges Gittergewebe gebildet sein kann, wird zusätzlich die mechanische Festigkeit der Steinwollmatte erhöht. Auch bei sehr feuchten und nassen Steinwollmatten ist somit gewährleistet, daß die Steinwollmatte beim Aufrollen und bei ihrer Handhabung nicht einreißen kann.

In weiterer zweckmäßiger Ausgestaltung der Erfindung befindet sich auf der Oberfläche der Steinwollmatte eine dünne Kiesschicht oder ein Ziegeldraht (bei dem der Draht bzw. die Drahtmaschen mit Ton ummantelt ist). Dadurch wird die Steinwollmatte beschwert, wodurch ihre Lagesicherheit wegen des größeren Gesamtgewichts erhöht und der Gefahr entgegengetreten wird, daß die Steinwollmatte durch die in Folge von Windsog auftretenden Kräfte von der Dachoberfläche abgehoben werden kann. Durch die Kiesschicht wird außerdem das Wachsen der Pflanzen bei trockener Witterung begünstigt. Unter den einzelnen Kieskörnern kann nämlich Feuchtigkeit gespeichert werden, die sich während der Nacht ansammelt.

Anhand der in der Zeichnung dargestellten Ausführungsbeispiele wird die Erfindung näher erläutert. Es zeigen:
- Fig. 1: eine Querschnittsansicht einer Steinwollmatte, die ein Vegetationselement bildet,
- Fig. 2: eine Querschnittsansicht eines ersten Vegetationselements mit einer Steinwollmatte, und
- Fig. 3: eine Querschnittsansicht eines zweiten Vegetationselements mit einer Steinwollmatte.

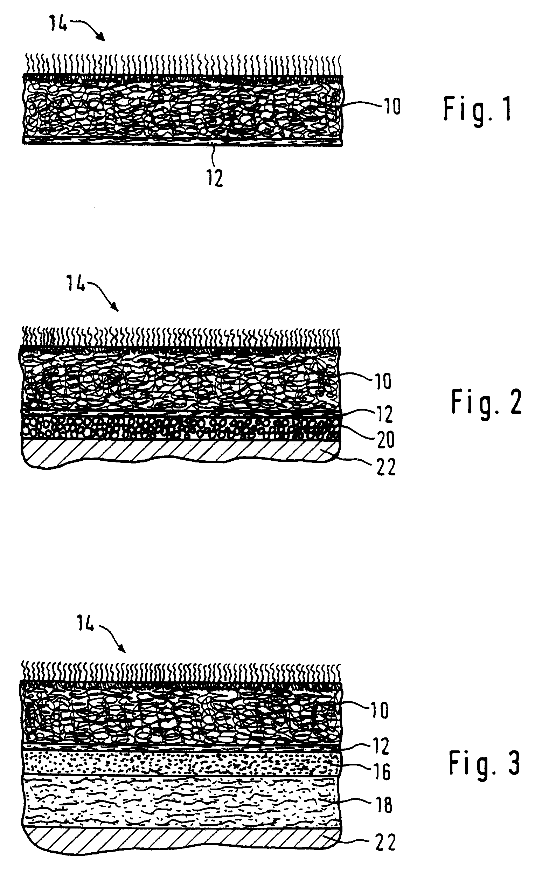

In Fig. 1 ist eine hygroskopische Steinwollmatte 10 dargestellt, die an ihrer unteren Seite eine Trägerschicht 12 besitzt, und die mit Pflanzen 14 begrünt ist. Die Trägerschicht 12 besteht aus einem wasserdurchlässigen Vlies oder einem groben Gittergewebe und ist durch Verklebung an der Steinwollmatte 10 befestigt.

Das Wurzelwerk der Pflanzen 14 erstreckt sich zumindest teilweise innerhalb der Steinwollmatte 10, wobei die Wurzeln eine mechanische Verfestigung der Steinwollmatte 10 im Sinne einer biologischen Armierung bewirken. Die Dicke der Steinwollmatte 10 beträgt vorzugsweise 3,0 cm und das Volumengewicht liegt bei 40 kg/m³. Obwohl die Steinwollmatte 10 also vergleichsweise dünn und leicht ist, ist sie aufgrund der biologischen Armierung und zusätzlich auch wegen der Trägerschicht 12 so weit mechanisch verfestigt, daß sie zu einer Rolle aufgerollt werden kann, ohne daß die Gefahr besteht, daß die Steinwollmatte 10 während der Handhabung und während des Aufrollens einreißt.

Die soweit beschriebene Steinwollmatte 10 erfüllt bereits alle minimalen Anforderungen eines Vegetationselementes und kann deshalb auch als solches auf einem Dach ausgerollt werden. Dieser Fall ist beispielhaft in Fig. 2 dargestellt. Um einen Abfluß von überschüssigem Wasser zu ermöglichen, ist dabei zwischen der Trägerschicht 12 und dem Dach 22 noch eine Drainageschicht 20 vorgesehen. Bei einem geneigten Dach 22 kann diese Drainageschicht 20 jedoch unter Umständen auch entfallen.

Fig. 3 zeigt ein anderes Beispiel eines Vegetationselements mit einer Steinwollmatte 10, die wiederum mit Pflanzen 14 begrünt ist und eine untere Trägerschicht 12 besitzt. Unterhalb der Trägerschicht 12 befindet sich eine Schicht mit Dünger 16, und darunter ist als eine weitere Schicht Erde 18 auf dem Dach 22 angeordnet.

Neben dem Merkmal, daß die begrünte Steinwollmatte 14 zu einer Rolle aufgerollt und damit auch leicht zum Einsatzort transportiert werden kann, besteht der Vorteil, daß nach dem Verlegen auf einem Dach weitere gärtnerische Arbeiten nicht erforderlich sind, da die Steinwollmatte 10 bereits begrünt ist. Dadurch lassen sich Ausfälle vermeiden, wie sie beim Stand der Technik unter Verwendung der vergleichsweise schweren und dicken Steinwollplatten auftreten. Diese Steinwollplatten werden nämlich im unbegrünten Zustand auf dem Dach verlegt, und erst anschließend werden Saatgut, Pflanzenteile und Dünger aufgebracht. Es ist also anschließend noch eine gärtnerische Arbeit erforderlich, was wegen des Standortes auf einem Dach aber sehr aufwendig ist und häufig nicht mit der erforderliche Sorgfalt und mit der erforderlichen Häufigkeit vorgenommen wird. Daher sind beim Stand der Technik größere Ausfälle der Begrünung zu beobachten, die bei der Erfindung vermieden werden.

## Patentansprüche

1. Hygroskopische Steinwollmatte (10) zur Verwendung bei einem Vegetationselement für die Begrünung von Dächern oder dergleichen, **dadurch gekennzeichnet**, daß die Steinwollmatte (10) eine Dicke von 2,0 - 3,5 cm beträgt und ein Volumengewicht zwischen 30 kg/m³ und 80 kg/m³ aufweist, so daß sie zu einer Rolle aufrollbar ist, und daß die Steinwollmatte mit Pflanzen (14) vorkultiviert und begrünt ist und ein Fertigprodukt bildet.

2. Steinwollmatte nach Anspruch 1, **dadurch gekennzeichnet**, daß sie ein Volumengewicht zwischen 30 kg/m³ und 50 kg/m³ aufweist.

3. Steinwollmatte nach Anspruch 1, **dadurch gekennzeichnet**, daß sie eine Dicke von etwa 3,0 cm und ein Volumengewicht von etwa 40 kg/m³ besitzt.

4. Steinwollmatte nach einem oder mehreren der vorgehenden Ansprüche 1 - 3, dadurch gekennzeichnet, daß sie eine untere wasserdurchlässige Trägerschicht (12) besitzt.

5. Steinwollmatte nach Anspruch 4, dadurch gekennzeichnet, daß die Trägerschicht (12) aus einem Vlies besteht.

6. Steinwollmatte nach Anspruch 4, **dadurch gekennzeichnet**, daß die Trägerschicht (12) aus einem gobmaschigen Gittergewebe besteht.

7. Steinwollmatte nach den Ansprüchen 4 - 6, dadurch gekennzeichnet, daß die Trägerschicht (12) mit der Steinwollmatte (10) verklebt ist.

8. Steinwollmatte nach einem oder mehreren der vorhergehenden Ansprüche 1 - 7, dadurch gekennzeichnet, daß auf ihrer Oberfläche eine dünne Kiesschicht aufgebracht ist.

9. Steinwollmatte nach einem oder mehreren der Vorhergehenden Ansprüche 1 - 7, **dadurch gekennzeichnet**, daß auf ihrer Oberfläche ein Ziegeldraht ausgelegt ist.

## Claims

1. Hygroscopic rock wool mat (10) for use in a vegetation element for greening roofs or the like, characterized in that the rock wool mat (10) has a thickness of 2.0 to 3.5 cm and a weight per unit volume between 30 and 80 kg/m³ , so that it can be rolled up to a roll, and that the rock wool mat is precultivated and greened with plants (14) and forms a finished product.

2. Rock wool mat according to claim 1, characterized in that it has a weight per unit volume between 30 and 50 kg/m³.

3. Rock wool mat according to claim 1, characterized in that it has a thickness of approximately 3.0 cm and a weight per unit volume of approximately 40 kg/m³.

4. Rock wool mat according to one or more of the claims 1 to 3, characterized in that it has a water-permeable support layer (12).

5. Rock wool mat according to claim 4, characterized in that the support layer (12) comprises a nonwoven fabric.

6. Rock wool mat according to claim 4, characterized in that the support layer (12) comprises a wide-mesh scrim.

7. Rock wool mat according to claims 4 to 6, characterized in that the support layer (12) is bonded to the rock wool mat (10).

8. Rock wool mat according to one or more of the claims 1 to 7, characterized in that a thin gravel layer is applied to its surface.

9. Rock wool mat according to one or more of the claims 1 to 7, characterized in that a clay-enveloped wire is laid out on its surface.

## Revendications

1. Natte de laine de roche hygroscopique (10) prévue pour être utilisée dans un élément de végétation pour l'engazonnement des toitures ou analogues, **caractérisée en ce** que la natte de laine de roche (10) a une épaisseur qui va de 2,0 à 3,5 cm et une masse volumique qui est comprise entre 30 et 80 kg/m³, de façon à pouvoir l'enrouler sur un rouleau et qu'elle soit cultivée et engazonnée de plantes (14) et qu'elle forme un produit fini.

2. Natte de laine de roche suivant la revendication 1, **caractérisée en ce** que sa masse volumique est comprise entre 30 et 50 kg/m³.

3. Natte de laine de roche suivant la revendication 1, **caractérisée en ce** qu'elle a une épaisseur d'environ 3,0 cm et une masse volumique d'environ 40 kg/m³.

4. Natte de laine de roche suivant l'une ou plusieurs des revendications précédentes 1 à 3, **caractérisée en ce** qu'elle comporte une couche porteuse (12) inférieure perméable à l'eau.

5. Natte de laine de roche suivant la revendication 4, **caractérisée en ce** que la couche porteuse (12) est en non tissé.

6. Natte de laine de roche suivant la revendication 4, **caractérisée en ce** que la couche porteuse (12) est en tissu réticulaire à grosses mailles.

7. Natte de laine de roche suivant les revendications 4 à 6, **caractérisée en ce** que la couche porteuse (12) est collée avec la natte de laine de roche (10).

8. Natte de laine de roche suivant l'une ou plusieurs des revendications précédentes 1 à 7, **caractérisée en ce** qu'est apportée, sur sa surface supérieure, une couche fine de sable.

9. Natte de laine de roche suivant l'une ou plusieurs des revendications précédentes 1 à 7, **caractérisée en ce** qu'est posé, sur sa surface supérieure, un fil d'argile.
